# EUROPÄISCHE PATENTSCHRIFT

(11) **EP 3 746 776 B1**
(45) Veröffentlichungstag und Bekanntmachung des Hinweises auf die Patenterteilung: **29.01.2025**
(21) Anmeldenummer: 19703265.9
(22) Anmeldetag: 29.01.2019
(51) Int. Cl.: B22F 10/28, B33Y 10/00, B33Y 30/00, B33Y 50/00, B33Y 50/02, G01N 23/203, G01N 23/2251, G05B 19/4099, B22F 12/90, B22F 10/36, B22F 12/13, B22F 12/67

(54) **VERFAHREN UND ELEKTRONENSTRAHLANLAGE ZUR ADDITIVEN HERSTELLUNG EINES WERKSTÜCKS**
METHOD AND ELECTRON BEAM SYSTEM FOR THE ADDITIVE PRODUCTION OF A WORKPIECE
PROCÉDÉ ET INSTALLATION À FAISCEAU ÉLECTRONIQUE POUR RÉALISER LA FABRICATION ADDITIVE D'UNE PIÈCE

(30) Priorität: 30.01.2018 DE 102018102082
(43) Veröffentlichungstag der Anmeldung: 09.12.2020
(73) Patentinhaber: pro-beam GmbH & Co. KGaA, 82205 Gilching (DE)
(72) Erfinder: LÖWER, Thorsten, 80339 München (DE)
(74) Vertreter: Ostertag & Partner Patentanwälte mbB
(86) Internationale Anmeldenummer: PCT/EP2019/052066
(87) Internationale Veröffentlichungsnummer: WO 2019/149678

(56) Entgegenhaltungen:
- EP-A1- 2 832 473
- EP-A1- 2 832 474
- EP-A2- 2 832 475
- CN-U- 206 794 757
- DE-A1- 102010 011 059
- E.B.A. BISDOM ET AL: "Backscattered electron scanning images of porosities in thin sections of soils, weathered rocks and oil-gas reservoir rocks using SEM-EDXRA", 31 December 1981 (1981-12-31), Wageningen, Netherlands, pages 191 - 206, XP055566463, ISBN: 978-90-22-00777-8, Retrieved from the Internet <URL:http://edepot.wur.nl/319061#page=184> [retrieved on 20190308]

## Beschreibung

### 1. Gebiet der Erfindung

Die Erfindung betrifft ein Verfahren zur additiven Herstellung eines Werkstücks.

Die Erfindung betrifft ferner eine Elektronenstrahlanlage zur additiven Herstellung eines Werkstücks aus einem pulverförmigen Werkstoff.

### 2. Beschreibung des Standes der Technik

Additive Herstellungsprozesse von Werkstücken erfahren derzeit unter dem Stichwort 3D-Druck große Aufmerksamkeit. Dabei ist es bereits bekannt, mit einem Laserstrahl einen pulverförmigen Werkstoff wie beispielsweise ein Kunststoffgranulat in einem Werkstoffbett Schicht für Schicht punktweise selektiv zu schmelzen, sodass nach und nach aus dem geschmolzenen und danach wieder ausgehärteten Kunststoff ein zusammenhängendes Werkstück erhalten wird. Am Ende des additiven Herstellungsprozesses wird dieses Werkstück von dem noch pulverförmigen Rest des pulverförmigen Werkstoffs befreit.

Zur Überwachung eines solchen Herstellungsprozesses ist aus der EP 2 032 345 B1 zudem bekannt, eine Kamera einzusetzen, welche die Bearbeitungszone optisch überwacht.

Eine Bildauswertung kann dann durch Aufzeichnen einzelner Schichtbilder Schicht für Schicht erkennen, ob das Werkstück wie gewünscht voranschreitet. Durch Zusammenfügen der einzelnen Schichtbilder kann die Bildverarbeitung darüber hinaus von dem Werkstück ein tomographisches Bild erzeugen.

Ferner ist es auch bekannt, sogenannte Elektronenstrahlanlagen, bei welchen in einem Vakuumgefäß ein Elektronenstrahl auf ein Werkstoffbett gerichtet wird, zur additiven Herstellung von Werkstücken zu verwenden.

Hierbei hat sich jedoch herausgestellt, dass die Anwendung eines optischen Überwachungsverfahrens nicht zu zufriedenstellenden Ergebnissen führt.

Aus EP 2 832 473 A1, EP 2 832 475 A2 und EP 2 832 474 A1 sind daher Verfahren bekannt, bei welchen zeitgleich mit zwei Elektronenstrahlen gearbeitet wird. Ein erster Schmelz-Elektronenstrahl wird zum selektiven Schmelzen verwendet, wohingegen ein zweiter Scan-Elektronenstrahl auf die Oberfläche gerichtet wird und diese scannt. Die bei diesem Scannen entstehenden Rückstreuelektronen werden erfasst, um ein Bild der Oberfläche zu erzeugen.

Aus der DE 10 2010 011 059 A1 und der CN 206 794 757 U gehen ähnliche Scanverfahren mit einem zweiten Elektronenstrahl hervor.

### ZUSAMMENFASSUNG DER ERFINDUNG

Aufgabe der Erfindung ist es daher, demgegenüber ein verbessertes Verfahren anzugeben.

Aufgabe der Erfindung ist es ferner eine entsprechende Elektronenstrahlanlage anzugeben.

Erfindungsgemäß wird diese Aufgabe durch ein Verfahren nach Anspruch 1 gelöst.

Bei der additiven Herstellung von Werkstücken mit Hilfe von Elektronenstrahlanlagen werden typischerweise andere Materialien wie bei der Verwendung von Laserstrahlanlagen verwendet. Beispielsweise werden in Elektronenstrahlanlagen häufig Metalle oder Metalllegierungen verwendet.

Der Erfinder hat dabei erkannt, dass beim Schmelzen mittels Elektronenstrahlen der bekannte Ansatz, eine Kamera einzusetzen, nicht anwendbar ist. Denn der zu verschmelzende Werkstoff im Pulverbett muss beim Elektronenstrahlschmelzen häufig vorerhitzt werden, um das Pulver bereits nahe an oder bis direkt an die Schmelztemperatur zu bringen. Ansonsten würde ein pulverförmiger Werkstoff aufgrund von elektrostatischer Absto-ßung und aufgrund der Prozessführung im Vakuum aus dem Pulverbett "verblasen".

Der pulverförmige Werkstoff ist daher bereits rotglühend und würde sich von einem weißglühenden Schmelzpunkt optisch kaum unterscheiden bzw. würde die Dynamik einer optischen Erfassung überfordern. Auch kühlt sich das Werkstück im Vakuum nur langsam ab, sodass die Grenze zwischen Werkstück und pulverförmigem Werkstoff bei einer optischen Erfassung ohne längere Wartezeiten kaum erkennbar wäre.

Der Erfinder hat ferner erkannt, dass ein Warten auf das Abkühlen des Werkstücks zur optischen Erfassung nicht anwendbar ist, da dann im Werkstück Gefügeänderungen auftreten, die nicht wünschenswert sind.

Der Erfinder ist daher dazu übergegangen, die Rückstreuelektronen zur Überwachung des additiven Herstellungsprozesses heranzuziehen.

Im Gegensatz zur optischen Erfassung einer gesamten Schicht mit einer einzelnen Aufnahme werden die Rückstreuelektronen jeweils nur an einem Punkt, dem Auftreffpunkt des Elektronenstrahls zurück gestreut. Daher liefert das erfindungsgemäße Verfahren erst durch eine entsprechende Scanbewegung eine der optischen Erfassung vergleichbares Bild.

Insbesondere kann dabei die Intensität der Rückstreuelektronen, d.h. der Rückstreuelektronenstrom, ausgewertet werden.

Insgesamt erlaubt das erfindungsgemäße Verfahren eine bessere Kontrolle des gesamten additiven Herstellungsprozesses bei der Verwendung eines Elektronenstrahls zum örtlich selektiven Schmelzen.

Vorzugsweise kann durch das Auswerten die Dichte des Werkstücks bestimmt werden.

Das Rückstreuverhalten der Elektronen wird stark durch die Dichte des Werkstoffes an dem jeweiligen Auftreffpunkt des Elektronenstrahls bestimmt. Daher eignet sich die Auswertung der erfassten Rückstreuelektronen besonders zur Bestimmung der Dichte des Werkstoffs. Dies ist ein besonderer Vorteil gegenüber der aus dem Herstellungsprozess mittels Laser bekannten optischen Erfassung, da dadurch eine innere Struktur des Werkstückmaterials bestimmt werden kann.

Vorzugsweise kann durch das Auswerten der Rückstreuelektronen ein Schichtbild des Werkstücks erzeugt werden.

Durch ein Erfassen der Rückstreuelektronen Schicht für Schicht während des additiven Herstellungsprozesses kann von dem erzeugten Werkstück eine Art tomographische Bild generiert werden. Da das Rückstreuverhalten der Elektronen vor allem von der Dichte des Werkstoffs abhängt, zeigt dieses Bild besonders vorteilhaft die Dichteverteilung innerhalb des Werkstücks.

Vorzugsweise kann durch das Auswerten eine Änderung der Zusammensetzung des Werkstoffs bestimmt werden.

Falls der Werkstoff für das Werkstück sich wie beispielsweise im Falle einer Legierung aus unterschiedlichen Komponenten zusammensetzt lässt sich auf diese Weise die Änderung der Legierung bestimmen, sofern sich diese Änderung auf das Rückstreuverhalten der Rückstreuelektronen auswirkt. So kann beispielsweise eine Legierung im ursprünglichen, pulverförmigen Werkstoff eine erste Dichte aufweisen und die geschmolzene und wieder erstarrte Legierung im Werkstück kann eine zweite Dichte aufweisen. Auch Änderungen der Zusammensetzung im Pulverbett können erkannt werden und beispielsweise zur Temperaturführung des Vorheizens verwendet werden. Insbesondere kann auch die Stickstoffverarmung eines Materials aufgrund des Schmelzvorgangs gemessen werden.

Vorzugsweise kann durch das Auswerten der Rückstreuelektronen die Mikroporosität des Werkstücks bestimmt werden.

Mit Hilfe entsprechender Parametrisierung des Elektronenstrahls und/oder der Temperaturführung des Pulverbetts kann ein mikroporöses Werkstück hergestellt werden, bei welchem die Pulverpartikel nur teilweise miteinander verschmolzen sind. Über das erfindungsgemäße Verfahren kann dabei die Mikroporosität überwacht werden. Davon unabhängig kann die Mikroporosität jedoch auch zur Überwachung eines vollständigen Schmelzprozesses verwendet werden, um eine möglichst geringe Mikroporosität des Werkstücks zu erhalten.

Vorzugsweise kann durch das Auswerten die Oberflächenqualität des Bauteils bestimmt wird.

Da die Rückstreuelektronen stark auf die Dichte des Werkstoffes reagieren, kann die Auswertung besonders gut den Übergang vom weniger Dichten pulverförmigen Werkstoff zum geschmolzenen und damit dichteren Werkstoff des Werkstücks erkennen. Insbesondere können dadurch Sinterhälse erkannt werden, die sich von einer Oberfläche des Werkstücks in das benachbarte heiße Pulver erstrecken. Dies ist beispielsweise von entscheidender Bedeutung zur Temperaturführung des Pulverbetts, um eine glatte Oberfläche zu erhalten.

Denn der additive Herstellungsprozess mit Hilfe des Elektronenstrahls hat gerade gegenüber dem aus kaltem Pulver bauenden Laserprozess den Nachteil schlechterer Oberflächenqualität aufgrund des Vorheizens. Durch das erfindungsgemäße Verfahren kann man dennoch ein Werkstück mit einer qualitativ hochwertigeren Oberfläche erzeugen, wobei das Werkstück zugleich weniger Verspannungen als ein Werkstück aus einem Laserprozesses aufweist.

Erfindungsgemäß erfolgt das Erfassen der Rückstreuelektronen während des Schmelzens. Da auch während des Schmelzvorgangs mit Hilfe des Elektronenstrahls Elektronen zurückgestreut werden, kann das Erfassen und Auswerten grundsätzlich auch zeitgleich am jeweiligen Schmelzpunkt erfolgen. Insbesondere kann die Dichte laufend während des Schmelzprozesses an dem jeweiligen Punkt gemessen werden.

Das Erfassen und Auswerten kann jedoch zusätzlich auch beispielsweise mit einer verminderten Elektronenstrahlintensität nach dem eigentlichen Schmelzvorgang erfolgen. Dann kann auch eine Scanbewegung durchgeführt werden, um beispielsweise ein gesamtes Schichtbild zu erzeugen.

Vorzugsweise kann das Ergebnis des Auswertens zur Prozesssteuerung verwendet werden. Ganz allgemein kann der gesamte additive Herstellungsprozess in Abhängigkeit der Auswertung der Rückstreuelektronen, insbesondere der oben genannten Auswertungen, geregelt werden. Zu den steuerbaren Prozessparametern zählt beispielsweise Temperatursteuerung für das Vorheizen des Pulvers, die Elektronenstahlintensität und/oder die Geschwindigkeit, mit welcher der Elektronenstrahl bewegt wird.

Erfindungsgemäß erfolgt das Auswerten der Rückstreuelektronen richtungsabhängig mit Hilfe mehrerer an unterschiedlichen Orten angeordneten Rückstreuelektronendetektoren.

Dazu kann zumindest einer der Detektoren beispielsweise zwischen 30° und 60° bezogen auf die senkrechte Rückstreurichtung seitlich angeordnet sein, um den Rückstreukegel richtungsabhängig zu erfassen. Ferner kann ein üblicherweise einstückiger Rückstreuelektronendetektor in mehrere Sektoren unterteilt sein. Dadurch kann man Schattenwurftopographien erzeugen, die für weitere Prozessteuerungen ausgewertet werden können.

Diese richtungsabhängige Messung der Rückstreuelektronen kann auch unabhängig von dem hier erfindungsgemäßen additiven Herstellungsverfahren ganz allgemein bei der Elektronenstrahlbearbeitung zur Anwendung kommen.

Hinsichtlich der Elektronenstrahlanlage wird die Aufgabe durch eine Elektronenstrahlanlage nach Anspruch 8 gelöst.

Eine solche Elektronenstrahlanlage kann die oben beschriebenen Verfahren durchführen.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine perspektivische Ansicht einer erfindungsgemäßen Elektronenstrahlanlage zur additiven Herstellung eines Werkstücks mit einem Rückstreuelektronenstrahldetektor und einer Auswerteeinheit;
- Figur 2: eine Schnittansicht der Elektronenstrahlanlage aus Figur 2;
- Figur 3: eine schematische Darstellung der Abfolge eines erfindungsgemäßen Verfahrens zur additiven Herstellung eines Werkstücks mit einem Schritt zur Erfassung und Auswertung der Rückstreuelektronen.

### BESCHREIBUNG BEVORZUGTER AUSFÜHRUNGSBEISPIELE

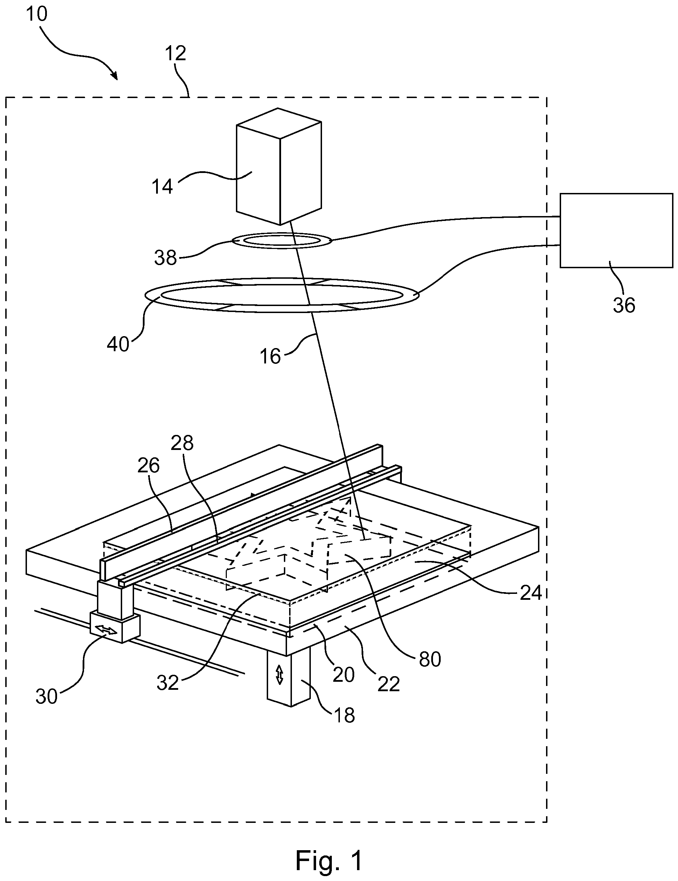

Figur 1 zeigt eine Elektronenstrahlanlage 10 mit einem Vakuumgehäuse 12, in welchem eine Elektronenstrahlkanone 14 zur Erzeugung eines Elektronenstrahls 16 angeordnet ist.

Im vorliegenden Ausführungsbeispiel ist die Elektronenstrahlkanone 14 oberhalb eines Hubtisches 18 mit einer elektrisch leitfähigen Hubplatte 20 und mit einem Aufnahmerahmen 22 angeordnet, der als räumlich begrenztes Pulverbehältnis dient, welches ein Pulverbett 24 aus einem zu bearbeitenden pulverförmigen Werkstoff aufnimmt.

Wird die Hubplatte 20 nach unten gefahren, kann das Pulverbett 24 nach und nach einen größer werdenden Bereich einnehmen, sodass das Pulverbett 24 Schicht für Schicht vergrößert wird.

Oberhalb des Aufnahmerahmens 22 ist dazu eine Pulverauftrageinrichtung 26 mit einer Rakel 28 angeordnet, die mit einer Verfahreinrichtung 30 über den Hubtisch 18 bewegt werden kann. Die Pulverauftrageinrichtung 26 weist einen nicht gezeigten Behälter für den pulverförmigen Werkstoff auf, aus welchem durch eine Verfahrbewegung jeweils als oberste lose Schicht 32 der Werkstoff auf dem Pulverbett 24 eben aufgerakelt werden kann.

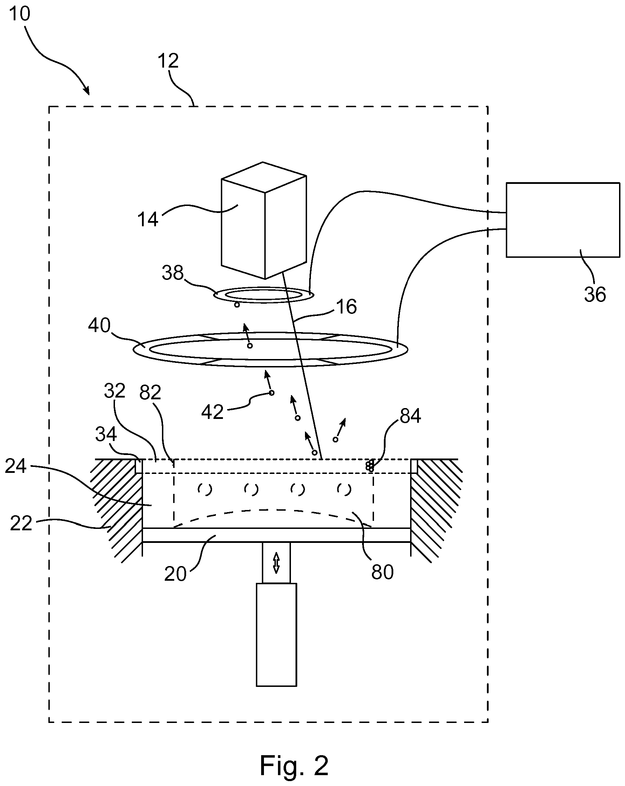

Über ein in Figur 2 ersichtliches Heizelement 34 am oberen Rand des Aufnahmerahmens 22 kann das Pulverbett 24 erwärmt werden.

Mit dem Bezugszeichen 80 ist in Figur 1 ferner ein beispielhaft als Stern dargestelltes Werkstück bezeichnet, das durch Verschmelzen einzelner Partikel im Pulverbett 22 mit Hilfe des Elektronenstrahls 16 nach und nach ausgebildet bzw. "gedruckt" wurde.

Aus Figur 2 ist dabei ersichtlich, dass das Werkstück 80 auch in senkrechter Richtung zur horizontalen Fläche des Pulverbetts 22 mit Ausnehmungen und Wölbungen komplexer strukturiert ist.

Zudem sind dort am Werkstück 80 beispielhaft kleinere Sinterhälse 82 gezeigt, welche aus der ansonsten glatten Oberfläche des Werkstücks 80 hervorstehen.

Ferner ist ein mikroporöser Bereich 84 des Werkstücks 80 gezeigt, in welchem nur eine teilweise Verschmelzung der Pulverpartikel erfolgte.

Die Elektronenstrahlanlage 10 weist außerdem eine Auswerte- und Steuerungseinheit 36 auf, welche elektrisch mit zwei Rückstreuelektronendetektoren 38 und 40 verbunden ist.

Im einfachsten hier gezeigten Fall sind die Rückstreuelektronendetektoren 38 und 40 konzentrisch um die Hauptachse des Elektronenstrahls 16 herum angeordnete Metallringe unterschiedlichen Durchmessers. Der Rückstreuelektronendetektor 40 ist dabei in vier Sektoren unterteilt, welche (hier nicht explizit dargestellt) jeweils einzeln elektrisch mit der Auswerte- und Steuerungseinheit 36 verbunden sind.

Wie aus Figur 2 ersichtlich ist, können mit Hilfe der Rückstreuelektronendetektoren 36 und 38 sogenannte Rückstreuelektronen 42 detektiert werden, die aufgrund des Elektroneneintrages durch den Elektronenstrahl 16 vom Pulverbett 24 oder dem Werkstück 80 zurückgestreut werden.

Die Auswerte- und Steuerungseinheit 36 ist dann dazu eingerichtet, verschiedene Eigenschaften des pulverförmigen Werkstoffs im Pulverbett 24 oder des Werkstücks 80 zu bestimmen.

Zudem kann die Auswerte- und Steuerungseinheit 36 diese Information dazu nutzen, den additiven Herstellungsprozess zu steuern. Dazu ist die Auswerte- und Steuerungseinheit 36 beispielsweise elektrisch mit dem Heizelement 34 zum Erwärmen des Pulverbetts 24 verbunden.

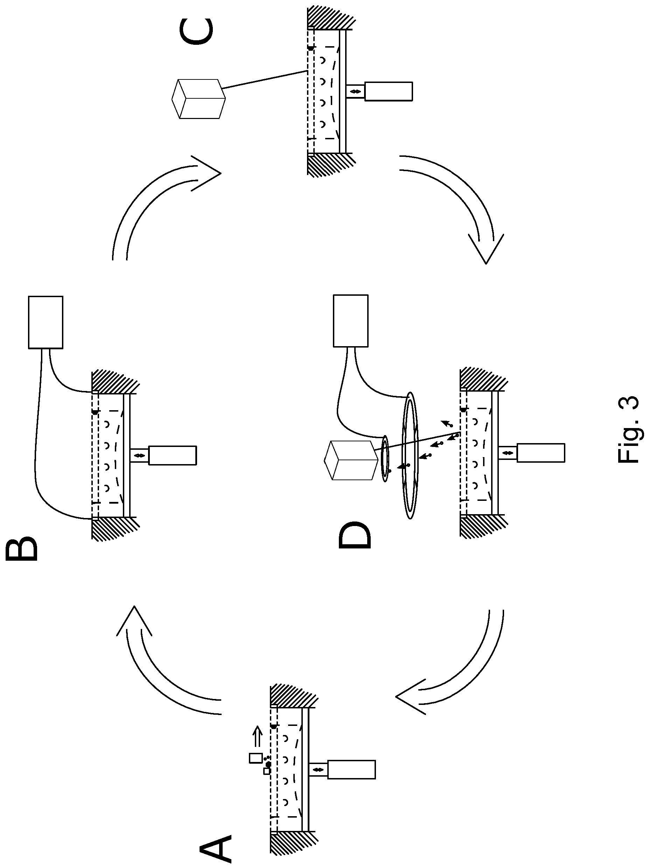

Die erfindungsgemäße Elektronenstrahlanlage 10 arbeitet wie aus Figur 3 ersichtlich wie folgt:
Zunächst wird im Schritt A mit der Pulverauftrageinrichtung 26 die oberste lose Schicht 32 aus pulverförmigem Werkstoff auf dem Pulverbett 24 aufgetragen. Im Nachlauf zur Bewegung der Pulverauftrageinrichtung 26 wird dabei noch während der Bewegung überschüssiges Pulver abgerakelt.

Anschließend bzw. zugleich wird entsprechend Schritt B das Pulverbett 24 dabei mit Hilfe des Heizelements 34 bis knapp unter oder an die Schmelztemperatur des Werkstoffs erhitzt.

Dann wird im Schritt C mit der Elektronenstrahlkanone 14 der Elektronenstrahl 16 erzeugt, der dann durch örtlich selektives Schmelzen der Pulverpartikel und das anschließende Erstarren des Werkstoffs die zu erzeugende 3D-Struktur des Werkstücks 80 vorgibt. Örtlich selektives Schmelzen bedeutet dabei ein punktuelles Verschmelzen des pulverförmigen Werkstoffes am Auftreffort des Elektronenstrahls 16. Je nach Scan-Strategie wird das Werkstück dann Punkt für Punkt, Linie für Linie und Schicht für Schicht erzeugt.

Im Schritt D wird dann der Elektronenstrahl 16 über das Pulverbett 24, insbesondere über das gesamte Pulverbett 24, geführt und dabei die Rückstreuelektronen 42 erfasst. Hierzu zeichnet die Auswerte- und Steuerungseinheit 36 den von den Rückstreuelektronendetektoren 38 und 40 erfassten Strom auf und wertet diesen aus.

Dadurch können verschiedene Eigenschaften sowohl des Pulverbetts 24 und/oder des Werkstücks 80 bestimmt werden. Hierzu gehört insbesondere die Bestimmung der Dichte des Werkstoffes und/oder des Werkstücks 80, der Oberflächenqualität des Werkstücks 80, des Vorhandenseins von Sinterhälsen 82, der Mikroporosität des Werkstücks 80, der Zusammensetzung des Werkstoffs und/oder anderer Eigenschaften.

Die oben beschriebenen Schritte A bis D werden jeweils Schicht um Schicht wiederholt bis die 3D-Struktur 80 beendet ist.

Da die Rückstreuelektronen 42 beispielsweise je nach Ausrichtung einer Oberfläche des Werkstücks 80 in unterschiedlich Richtungen unterschiedlich stark rückgestreut werden, kann die Auswerte- und Steuerungseinheit 36 durch entsprechende Auswertung der unterschiedlichen Ströme beispielsweise in den vier Sektoren des Rückstreuelektronendetektors 40 oder zwischen den beiden Detektoren 38 und 40 zusätzliche Informationen erhalten.

Dadurch können verschiedene Eigenschaften sowohl des Pulverbetts 24 und/oder des Werkstücks 80 bestimmt werden. Hierzu gehört insbesondere die Bestimmung der Dichte des Werkstoffes und/oder des Werkstücks 80, der Oberflächenqualität des Werkstücks 80, des Vorhandenseins von Sinterhälsen 82, der Mikroporosität des Werkstücks 80, der Zusammensetzung des Werkstoffs und/oder anderer Eigenschaften.

Die oben beschriebenen Schritte A bis D werden jeweils Schicht um Schicht wiederholt bis die 3D-Struktur 80 beendet ist.

Da die Rückstreuelektronen 42 beispielsweise je nach Ausrichtung einer Oberfläche des Werkstücks 80 in unterschiedlich Richtungen unterschiedlich stark rückgestreut werden, kann die Auswerte- und Steuerungseinheit 36 durch entsprechende Auswertung der unterschiedlichen Ströme beispielsweise in den vier Sektoren des Rückstreuelektronendetektors 40 oder zwischen den beiden Detektoren 38 und 40 zusätzliche Informationen erhalten.

## Patentansprüche

1. Verfahren zur additiven Herstellung eines Werkstücks (80) mit folgenden Schritten:
a) Bereitstellen eines pulverförmigen Werkstoffes in einem Pulverbett (24) in einer Elektronenstrahlanlage (10) umfassend einen einzelnen Elektronenstrahlerzeuger (14), der dazu eingerichtet ist, einen Elektronenstrahl (16) auf lateral unterschiedliche Orte des Pulverbetts (24) zu richten, um dort örtlich selektiv den pulverförmigen Werkstoff zu schmelzen;
b) Örtlich selektives Schmelzen des Werkstoffes im Pulverbett (24) mit dem bewegten Elektronenstrahl (16);
c) Erfassen von Rückstreuelektronen (42), die von dem Werkstoff oder dem Werkstück (80) zurückgestreut werden, mit einem Rückstreuelektronendetektor (38, 40);
d) Auswerten der Rückstreuelektronen (42) mit einer Auswerteeinheit (36);
**dadurch gekennzeichnet, dass**
e) das Erfassen der Rückstreuelektronen (42), die aufgrund des Elektroneneintrages durch den Elektronenstrahl (16) zurückgestreut werden, während des Schmelzens und das Auswerten der Rückstreuelektronen (42) richtungsabhängig mit Hilfe mehrerer an unterschiedlichen Orten angeordneten Rückstreuelektronendetektoren (38; 40) erfolgt.

2. Verfahren nach Anspruch 1, **dadurch gekennzeichnet, dass** durch das Auswerten der Rückstreuelektronen (42) die Dichte des Werkstücks (80) und/oder des pulverförmigen Werkstoffes bestimmt wird.

3. Verfahren nach einem der vorhergehenden Ansprüche, **dadurch gekennzeichnet, dass** durch Auswerten der Rückstreuelektronen (42) ein Schichtbild des Werkstücks (80) und/oder des pulverförmigen Werkstoffes erzeugt wird.

4. Verfahren nach einem der vorhergehenden Ansprüche, **dadurch gekennzeichnet, dass** durch das Auswerten der Rückstreuelektronen (42) eine Änderung der Zusammensetzung des Werkstoffs bestimmt wird.

5. Verfahren nach einem der vorhergehenden Ansprüche, **dadurch gekennzeichnet, dass** durch das Auswerten der Rückstreuelektronen (42) die Mikroporosität des Werkstücks (80) bestimmt wird.

6. Verfahren nach einem der vorhergehenden Ansprüche, **dadurch gekennzeichnet, dass** durch das Auswerten der Rückstreuelektronen (42) die Oberflächenqualität des Werkstücks (80) bestimmt wird.

7. Verfahren nach einem der vorhergehenden Ansprüche, **dadurch gekennzeichnet, dass** das Ergebnis des Auswertens zur Prozesssteuerung verwendet wird.

8. Elektronenstrahlanlage (10) zur additiven Herstellung eines Werkstücks (80) aus einem pulverförmigen Werkstoff mit
a) einem Behältnis (20, 22) zur Aufnahme eines pulverförmigen Werkstoffes in einem Pulverbett (24),
b) einem einzelnen Elektronenstrahlerzeuger (14), der dazu eingerichtet ist, einen Elektronenstrahl (16) auf lateral unterschiedliche Orte des Pulverbetts (24) zu richten, um dort örtlich selektiv den pulverförmigen Werkstoff zu schmelzen,
**dadurch gekennzeichnet, dass**
c) die Elektronenstrahlanlage (10) eine Auswerteeinheit (36) und mehrere an unterschiedlichen Orten angeordnete Rückstreuelektronendetektoren (38, 40) aufweist, die dazu eingerichtet sind, Rückstreuelektronen (42), die von dem Werkstoff oder dem Werkstück (80) aufgrund des Elektroneneintrages durch den Elektronenstrahl (16) zurückgestreut werden, während des Schmelzens zu erfassen und richtungsabhängig mit Hilfe der Rückstreuelektronendetektoren (38, 40) auszuwerten.

## Claims

1. Method for additive manufacturing of a workpiece (80) comprising the following steps:
a) providing a powdery material in a powder bed (24) in an electron beam system (10) comprising a single electron beam generator (14) which is configured to direct an electron beam (16) to laterally different locations of the powder bed (24) in order to selectively melt the powdery material locally there;
b) locally selective melting of the material in the powder bed (24) with the moved electron beam (16);
c) detecting backscattered electrons (42), which are scattered back from the material or the workpiece (80), with a backscattered electron detector (38, 40);
d) evaluating the backscattered electrons (42) with an evaluation unit (36);
**characterized in that**
e) the detection of the backscattered electrons (42), which are backscattered due to the electron input by the electron beam (16), takes place during melting and the evaluation of the backscattered electrons (42) takes place in a direction-dependent manner by means of a plurality of backscattered electron detectors (38; 40) arranged at different locations.

2. Method according to claim 1, **characterized in that** the density of the workpiece (80) and/or of the powdery material is determined by the evaluation of the backscattered electrons (42).

3. Method according to one of the preceding claims, **characterized in that** a layer image of the workpiece (80) and/or of the powdery material is generated by the evaluation of the backscattered electrons (42).

4. Method according to one of the preceding claims, **characterized in that** a change in the composition of the material is determined by the evaluation of the backscattered electrons (42).

5. Method according to one of the preceding claims, **characterized in that** the microporosity of the workpiece (80) is determined by the evaluation of the backscattered electrons (42).

6. Method according to one of the preceding claims, **characterized in that** the surface quality of the workpiece (80) is determined by the evaluation of the backscattered electrons (42).

7. Method according to one of the preceding claims, **characterized in that** the result of the evaluation is used for process control.

8. Electron beam system (10) for the additive manufacturing of a workpiece (80) from a powdery material with
a) a container (20, 22) for receiving a powdered material in a powder bed (24),
b) a single electron beam generator (14) which is set up to direct an electron beam (16) onto laterally different locations of the powder bed (24) in order to selectively melt the powder material locally there,
**characterized in that**
c) the electron beam system (10) has an evaluation unit (36) and a plurality of backscattered electron detectors (38, 40) arranged at different locations, which are configured to detect backscattered electrons (42), which are scattered back from the material or the workpiece (80) due to the electron input by the electron beam (16), during melting and to evaluate them direction-dependent by means of the backscattered electron detectors (38, 40).

## Revendications

1. Procédé de fabrication additive d'une pièce à usiner (80) avec les étapes suivantes :
a) mise à disposition d'un matériau pulvérulent dans un lit de poudre (24) dans une installation de faisceau électronique (10) comprenant un générateur de faisceau électronique unique (14) qui est configuré pour orienter un faisceau électronique (16) sur différents emplacements latéralement du lit de poudre (24) pour y faire fondre de manière localement sélective le matériau pulvérulent ;
b) fonte localement sélective du matériau dans le lit de poudre (24) avec le faisceau électronique déplacé (16) ;
c) détection d'électrons de rétrodiffusion (42) qui sont rétrodiffusés par le matériau ou la pièce à usiner (80) avec un détecteur d'électrons de rétrodiffusion (38, 40) ;
d) évaluation des électrons de rétrodiffusion (42) avec un module d'évaluation (36) ;
**caractérisé en ce que**
e) la détection des électrons de rétrodiffusion (42) qui sont rétrodiffusés en raison de l'apport d'électrons par le faisceau électronique (16) s'effectue pendant la fonte et l'évaluation des électrons de rétrodiffusion (42) en fonction de la direction à l'aide de plusieurs détecteurs d'électrons de rétrodiffusion (38 ; 30) disposés à différents emplacements.

2. Procédé selon la revendication 1, **caractérisé en ce que** la densité de la pièce à usiner (80) et/ou du matériau pulvérulent est déterminée par l'évaluation des électrons de rétrodiffusion (42).

3. Procédé selon une des revendications précédentes, **caractérisé en ce qu'**une image de couche de la pièce à usiner (80) et/ou du matériau pulvérulent est générée par l'évaluation des électrons de rétrodiffusion (42).

4. Procédé selon une des revendications précédentes, **caractérisé en ce qu'**une modification de la composition du matériau est déterminée par l'évaluation des électrons de rétrodiffusion (42).

5. Procédé selon une des revendications précédentes, **caractérisé en ce que** la microporosité de la pièce à usiner (80) est déterminée par l'évaluation des électrons de rétrodiffusion (42).

6. Procédé selon une des revendications précédentes, **caractérisé en ce que** la qualité de surface de la pièce à usiner (80) est déterminée par l'évaluation des électrons de rétrodiffusion (42).

7. Procédé selon une des revendications précédentes, **caractérisé en ce que** le résultat de l'évaluation est utilisé pour la commande de processus.

8. Installation de faisceau électronique (10) pour la fabrication additive d'une pièce à usiner (80) à partir d'un matériau pulvérulent avec
a) un récipient (20, 22) pour la réception d'un matériau pulvérulent dans un lit de poudre (24),
b) un générateur de faisceau électronique unique (14) qui est configuré pour orienter un faisceau électronique (16) sur différents emplacements latéralement du lit de poudre (24) pour y faire fondre de manière localement sélective le matériau pulvérulent,
**caractérisée en ce que**
c) l'installation de faisceau électronique (10) présente un module d'évaluation (36) et plusieurs détecteurs d'électrons de rétrodiffusion (38, 40) disposés à différents emplacements qui sont configurés pour détecter pendant la fonte et pour évaluer en fonction de la direction à l'aide des détecteurs d'électrons de rétrodiffusion (38, 40) des électrons de rétrodiffusion (42) qui sont rétrodiffusés par le matériau ou la pièce à usiner (80) en raison de l'apport d'électrons par le faisceau électronique (16).
